# EUROPEAN PATENT APPLICATION

(11) **EP 1 820 629 A1**
(43) Date of publication of application: **22.08.2007**
(21) Application number: 05807062.4
(22) Date of filing: 18.11.2005
(51) Int. Cl.: B29D 30/60, B29D 30/08

(54) **TIRE MOLDING DEVICE**

(30) Priority: 19.11.2004 JP 2004336506
(71) Applicant: Bridgestone Corporation, Tokyo 104-8340 (JP)
(72) Inventor: KOYAMA, Yutaka, c/o BRIDGESTONE CORPORATION, Technical Center, Kodaira-shi, Tokyo 187-8531 (JP)
(74) Representative: Whalley, Kevin
(86) International application number: PCT/JP2005/021210
(87) International publication number: WO 2006/054679

(57) **Abstract**

Air intrusion at molding of a ribbon laminated tire is prevented. When a ribbon (S) is wound on a molding drum (1) in the helical state so as to form a ribbon laminated tire, a pressing roll is made movable in the axial direction of the molding drum (1) in synchronization with an affixing roll (2) of a ribbon extruder (3), and driving control is carried out for revolution around a Z-axis and moreover around a Y-axis in addition to movement in the X-axis and Y-axis directions so that the pressing roll can be pressed in contact perpendicularly to the ribbon surface wound in the helical state over the molding drum (1).

## Description

### Technical field

The present invention relates to a tire molding device and particularly to a tire molding device provided with a pressing means for a ribbon constituting a tire.

### Background Art

It is important to accurately bond a plurality of tire constituting members (ribbon) in a tire molding device in order to have a favorable product tire quality. In general, a pressing roll (stitching roll) is used for this bonding. In order to accurately bond the tire constituting members to each other by the stitching roll, it is necessary to place the pressing force of the stitching roll at a right angle to the surface of the tire constituting member.

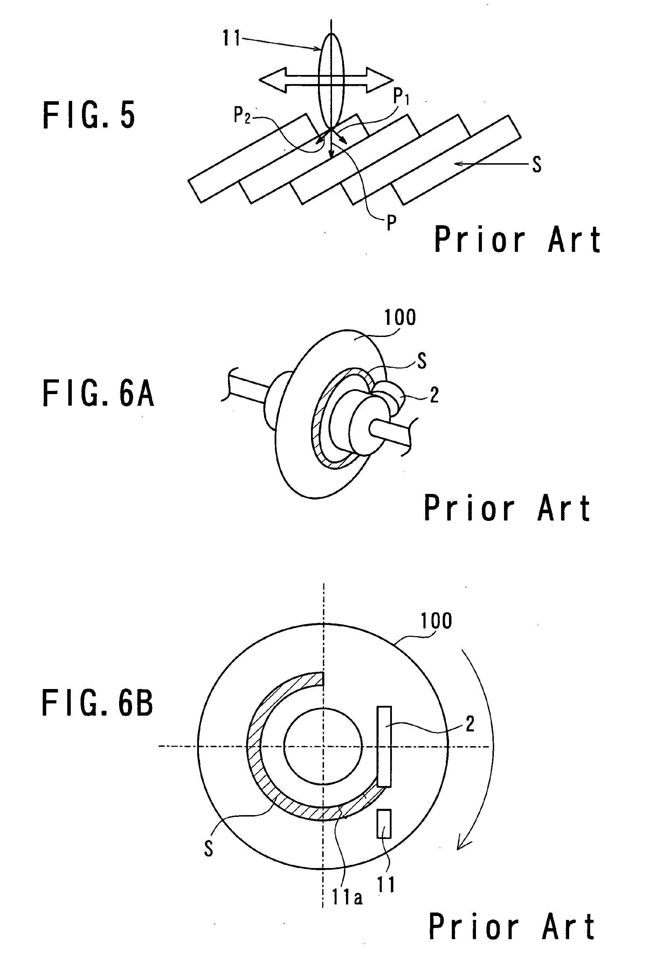

Fig. 5 is a sectional view illustrating a state where a ribbon S is affixed onto a molding drum and pressed by a pressing roll 11 in a conventional device. As shown in Fig. 5, when the pressing roll 11 is brought into contact with the ribbon S with an angle other than a right angle, a pressing force P by the pressing roll 11 is distributed to a force P1 for bonding the member and a force P2 for displacing the member laterally. The laterally displacing force P2 causes lost shape such as a wrinkle on the ribbon S, separation between the constituting members or a phenomenon of air intrusion, which deteriorates the tire quality.

Therefore, for example, a device is known that two screw shafts driven independently by a power means are provided in parallel with the shaft of a tire molding drum on a moving means capable of advance/retreat in a direction perpendicular to the shaft of the tire molding drum, a pair of bases is provided on a nut screwed to each of the screw shafts, and a stitching roll is rotatably tied with respect to the base, and thereby three axial motions of a locomotive motion in parallel with the drum shaft, a revolving motion with an angle with respect to the drum shaft, and a movement in a direction perpendicular to the drum shaft are combined/controlled by a controller by a computer device and the like so that the stitching roll can be pressed in the direction perpendicular to the surface of the tire constituting member all the time when bonding the tire constituting member (Patent Document 1).

In this configuration, through the rotation control of each screw shaft, a moving amount of the pair of bases is controlled, and the stitching roll rotatably tied on the respective base is revolved using a difference in feeding of the screw shafts so that an angle with respect to the drum shaft is given to the stitching roll.

When a green tire is to be molded by winding a ribbon, while the ribbon is wound in a helical state and laminated, a stepped portion is formed at the edge of the ribbon by overlapping, a gap is generated from the ribbon wound previously, and nonconformity to cause defective internal adhesion occurs in a product tire. And the stepped portion forms a serrated surface on the outer surface and causes a fear that bare or flow crack is generated and durability of the product tire is severely affected.

Then, a manufacturing device of a rubber ribbon laminated body provided with a bonding device is known that when the ribbon supplied from an applicator roll is wound and laminated in the helical state around the outer surface of a cylindrical drum (molding drum) under rotating driving, the edge of the rubber ribbon is pressed and bonded to the cylindrical drum immediately after winding of the rubber ribbon and ground away (Patent Document 2).

This bonding device is provided with the cylindrical drum supported rotatably and the applicator roll (affixing roll) for supplying the rubber ribbon to the outer surface of the cylindrical drum by fore-and-aft and right-and-left movements and revolving operation in synchronization with a ribbon extruder and winding and laminating the rubber ribbon in the helical state, and the stitching roll is supported via two links capable of swing with respect to a swing arm following the fore-and-aft and right-and-left movements and revolving operation of the applicator roll, and by driving one of the two links by a liquid pressure cylinder, for example, the stitching roll is moved and surely positioned.

However, with the configuration described in Patent Document 1, since the stitching roll is revolved using the feeding difference of the screw shafts, precious position control is not possible and also, the device itself tends to be bulky and is not suitable for winding of a ribbon with a small width of approximately 30 nim. Also, since the pressing roll is constructed such that it can not be revolvd in the plane crossing the base, positioning can not be accurate all the time in a positional relation with the cylindrical drum.

In Patent Document 2, with respect to the swing arm following the fore-and-aft and right-and-left movements and revolving operation of the applicator roll for winding the ribbon (rubber) around the drum, the stitching roll is further supported capable of swing for positioning, and thus, the stitching roll (pressing roll) can be positioned with accuracy.

However, in this manufacturing device of a ribbon laminated body, the stitching roll, the ribbon supplying device (ribbon extruder) and the applicator roll are integrally constituted and the stitching roll is arranged below the applicator roll. Thus, there is no problem at a flat portion close to the center of a tire 100, but when a ribbon S is laminated on the side of the tire 100 molded on the molding drum 1 as shown in Fig. 6A, as obvious from the side view shown in Fig. 6B, the diameter of the ribbon S being wound is reduced, and the wound ribbon S might be displaced from an operation area of the stitching roll 11 and unable to be pressed. Thus, even if the stitching roll 11 is to be moved to a position of 11 a in the figure, positioning at the position in the figure is hardly possible in view of the structure.

Patent Document 1: Japanese Patent Application Laid-Open No. 9-117969

Patent Document 2: Japanese Patent Application Laid-Open No. 2004-216603

### Disclosure of the Invention

### Problem to be solved by the Invention

The present invention has an object to provide a tire molding device which can completely bleed air and hardly generate air intrusion, which causes a problem in a tire, by enabling accurate positioning of a ribbon pressing means so that a ribbon can be pressed not only at a flat portion at the tire center but also on its sides, that is, in the best state in molding a ribbon laminate tire on a molding drum.

### Means for Solving Problem

An invention according to claim 1 is a tire molding device provided with a pressing means for winding a ribbon pushed out of a ribbon extruder around a molding drum and pressing/bonding the ribbon wound in the helical state separately from the ribbon extruder, the device comprising a means for controlling drive of the pressing means along a Y-axis and an X-axis crossing each other and means for controlling revolution of the pressing means around a Z-axis at a right angle to the Y-axis and the X-axis, respectively.

An invention according to claim 2 is a tire molding device described in claim 1 , wherein the tire molding device is further provided with means for controlling revolution of the pressing means around the Y-axis.

An invention according to claim 3 is a tire molding device described in claim 1 or 2, wherein means for controlling drive of the ribbon extruder along the Y-axis and the X-axis crossing each other and means for controlling revolution of the ribbon extruder around the Z-axis at a right angle to the Y-axis and the X-axis, respectively.

An invention according to claim 4 is a tire molding device described in any one of claims 1 to 3, wherein the extruder is provided with an affixing means for winding the ribbon around the molding drum in the helical state and the means for controlling drive controls drive of the pressing means so that the ribbon immediately after the winding is pressed in synchronization with the winding operation of the affixing means.

### (Action)

A ribbon pushed out of a ribbon extruder is wound by an affixing means on a molding drum in the helical state, a pressing means is controlled in synchronization with the winding operation, the ribbon immediately after the winding is pressed and the wound ribbons are bonded. At that time, according to an angle of the ribbon surface wound on the molding drum with respect to the drum surface, control is carried out so that the pressing means is brought into contact with the ribbon surface at a right angle all the time.

### Advantageous Effect of the Invention

According to the present invention, the pressing means can be accurately positioned with respect to the ribbon pushed out of the ribbon extruder and wound on the molding drum in the helical state all the time regardless of the ribbon wound state. Therefore, pressing is possible without a gap between the wound ribbons, and air can be bled effectively. Also, moving control can be made in synchronization with the winding operation, and moreover, since the pressing means can be arranged independently regardless of the position of the affixing roll, the ribbon immediately after affixing can be surely brought into close contact not only at the tire center but also at the tire sides, and thereby air can be bled further effectively.

Also, by further providing means for controlling revolution of the pressing means around the Y-axis, freedom in positioning of the pressing means can be further improved.

### Brief Description of the Drawings

Fig. 1 is a perspective view schematically showing a tire molding device according to an embodiment of the present invention;
Fig. 2 is a block diagram schematically showing a controller of a ribbon extruder and a presser;
Fig. 3 is a sectional view showing a state where a ribbon is pressed by the presser onto a wound ribbon;
Fig. 4 is a side view showing a state where the ribbon is pressed by the presser on the side face of a tire;
Fig. 5 is a sectional view showing a state where the ribbon is pressed by a conventional presser; and
Fig. 6A is a perspective view showing a state where the ribbon is pressed by the conventional presser on the side face of a tire and Fig. 6B is a side view of the same.

### Description of the Reference Symbols

1: molding drum
2: affixing roll
3: (ribbon) extruder
4: first driving means
5: first moving table
6: second driving means
7: second moving table
8: revolving base
9: support rod
10: presser
11: pressing roll
12: pressing roll support
14: third driving means
15: third moving table
16: fourth driving means
17: fourth moving table
18: revolving base
19: support rod
20: molding drum driving device
S: ribbon

### Best Mode for Carrying Out the Invention

An embodiment of the present invention will be described below referring to the attached drawings.

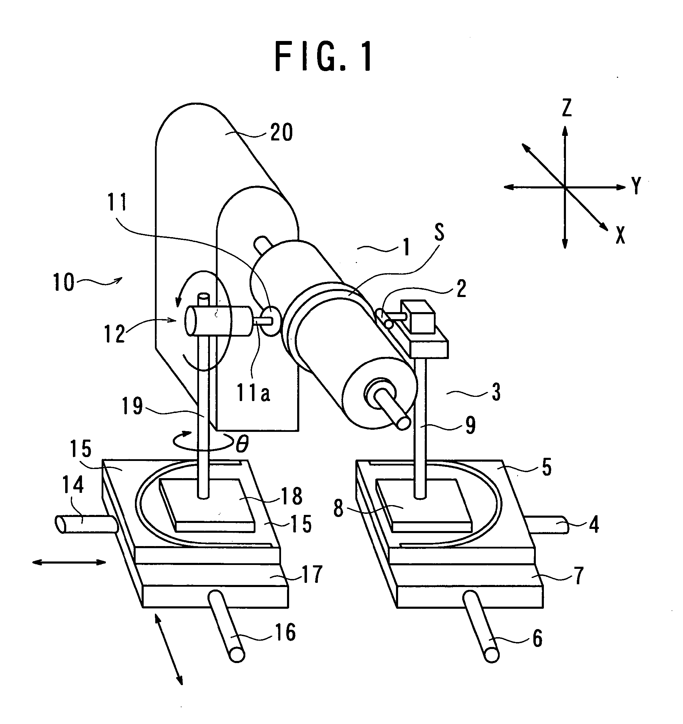

Fig. 1 is a perspective view schematically illustrating a tire molding device showing a first embodiment of the present invention.

In this figure, reference numeral 1 denotes a molding drum made of a cylindrical body, and reference numeral 2 denotes an affixing roll as an affixing means for winding and laminating a rubber ribbon S on the molding drum in the helical state. The affixing roll 2 is constructed integrally with a ribbon extruder 3.

The ribbon extruder 3 is provided with a nozzle for extruding a ribbon and attached on a first moving table 5 capable of moving in a direction approaching to/separating from the molding drum 1 (referred to as the Y-axis direction) by appropriate driving means 4 comprised by a screw rod and a ball screw, rack and pinion, or a cylinder/piston mechanism and the first moving table 5 is mounted on a second moving table 7 capable of moving in a direction at a right angle to the first moving table 5, that is, in a direction in parallel with the shaft of the molding drum 1 (referred to as the X-axis direction) by a driving means 6 similar to the first moving table 5.

Also, a support rod 9 supporting an extruding head of the ribbon extruder 3 is mounted on a revolving base 8 capable of revolution by a predetermined angle by appropriate driving means (gear mechanism, cylinder/piston.mechanism and the like, for example), not shown, on the first moving table 5.

Therefore, since the ribbon extruder 3 is capable of moving in the axial direction of the molding drum 1 and a direction approaching to/separating from the drum 1 and also capable of revolving around the support rod 9 , that is, around the Z-axis, the affixing roll 2 mounted integrally with the extruder is also moved in fore-and-aft and right-and-left directions and revolved in synchronization with the ribbon extruder 3 and can be positioned in parallel with the shaft of the molding drum 1 , and the rubber ribbon S can be supplied toward the outer surface of the molding drum 1 and the ribbon S can be wound and laminated in the helical state.

A presser 10 for the ribbon S presses the rubber ribbon S immediately after winding and affixing the ribbon S on the molding drum 1 and is provided with a pressing roll 11 as a pressing means for bonding the ribbon on the already wound/bonded ribbon S and is mounted on a third moving table 15 capable of moving in a direction approaching to/separating from the molding drum 1 (Y-axis direction) by appropriate driving means 14 constituted by a screw rod and a ball screw, rack and pinion, or a cylinder/piston mechanism, for example, similarly to the ribbon extruder 3. Also, the third moving table 15 is mounted on a fourth moving table 17 capable of moving in a direction at a right angle to the third moving table 15, that is, a direction in parallel with the shaft of the molding drum 1 (X-axis direction) by a driving means 16 similarly to the first moving table 5. Here, the fourth moving table 17 and the second moving table 7 are driven/controlled by the respective driving means 16, 6 so that they can be moved in the X direction in synchronization with each other.

A support rod 19 supporting a pressing roll support 12 is mounted on a revolving base 18 capable of revolution by a predetermined angle θ by appropriate revolution driving means (gear mechanism, cylinder/piston mechanism and the like, for example), not shown, on the third moving table 15, and the pressing roll support 12 is constituted by a cylinder/piston mechanism, for example, so as to advance/retreat a support arm 11a by a liquid pressure so that the pressing roll 11 is advanced/retreated with respect to the molding drum 1 . Also, it is possible to constitute the pressing roll 11 so that the roll is revolved/driven by a predetermined angle with respect to the support arm 11a by connecting the pressing roll 11 to the support arm 11a capable of revolution and having a fluid pressure act on a pressing roll connecting portion.

Therefore, the pressing roll 11 is capable of moving in the axial direction of the molding drum 1 and a direction approaching to/separating from the drum 1 and also capable of revolving in the X-Y-axis plane by revolution of the support rod 19 supporting the pressing roll support 12. Furthermore, the pressing roll 11 can be arranged so as to be able to revolve with respect to the support arm 11a by predetermined angle. In this case, the pressing roll 11 can move fore-and-aft and right-and-left with respect to the molding drum 1 and capable of revolution around the support rod 19 and the support arm 11a, thus further improving freedom in positioning.

In a tire molding process, when the ribbon extruder 3 extrudes the ribbon S while moving in the axial direction of the molding drum 1 and winds the ribbon on the molding drum 1 in the helical state while rolling the ribbon by the affixing roll 2, the pressing roll 11 is moved in synchronization with the movement of the affixing roll 2 in the axial direction of the molding drum 1 and moreover, is positioned so as to press the ribbon surface at a right angle all the time according to the inclination of the ribbon surfaces of overlapping ribbons affixed onto the molding drum 1.

Reference numeral 20 in the figure denotes a driving device of the molding drum.

As mentioned above, movement of the extruder 3 with respect to the molding drum 1 and hence, the positioning of the affixing roll 2, the movement of the affixing roll 2, the positioning of the pressing roll 11 and the movement in synchronization with the extruder 3 are all controlled by a computer of a controller.

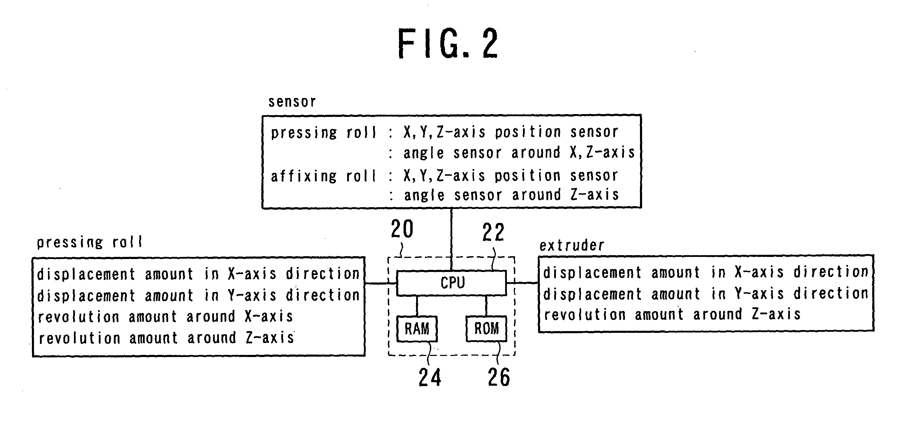

Fig. 2 is a block diagram schematically illustrating a controller 20 of the present invention.

That is, the controller 20 includes a CPU (central processing unit) 22, a ROM 26 storing a program and the like required for executing control, and a RAM 24 storing data and the like required for processing by the CPU 22, and may include a display device as needed.

The controller 20 detects the position of the affixing roll in the X-axis and the Y-axis directions and an angle around the Z-axis by a position sensor and an angle sensor, not shown, respectively, and controls each driving device from the values so that the affixing roll 2 becomes in parallel with the shaft of the molding drum 1 and comes to a predetermined set position from the surface. Similarly, with regard to the pressing roll 11, the position in the X-axis and the Y-axis directions and a revolution angle around the Z-axis and a revolution angle around the pressing roll support 12 (around Y-axis) are detected by a position sensor and an angle sensor, not shown, and positioning control is executed so that the pressing roll 11 presses the ribbon surface at a right angle all the time according to an inclination angle of the ribbon S affixed on the molding drum 1 by the affixing roll 2 in the helical state with respect to the shaft of the molding drum.

The pressing force of the pressing roll 11 onto the wound ribbon S is adjusted by adjusting a distance in the Y-axis direction in Fig. 1 through operation of the piston/cylinder mechanism to which the pressing roll 11 is mounted, for example.

By controlling the position and respective revolution angles of the pressing roll as above, the ribbon S immediately after winding can be bonded so that air does not enter the already wound ribbon S.

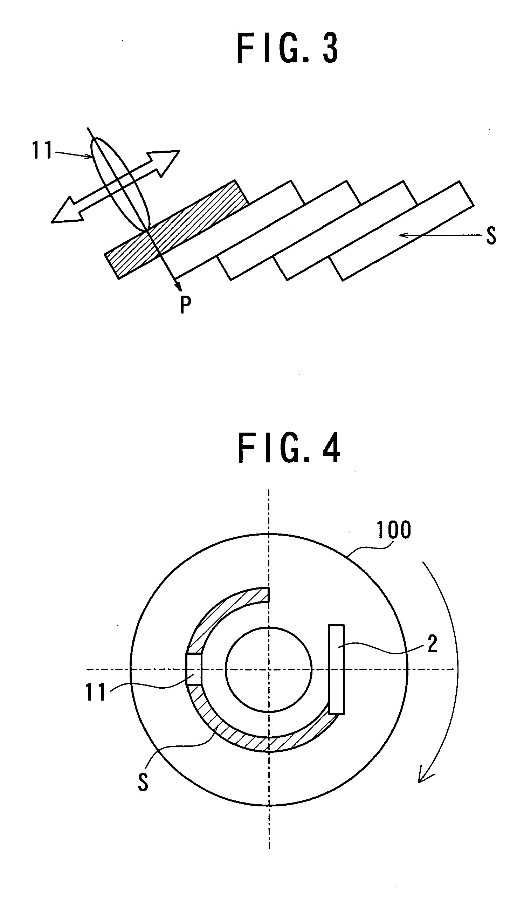

Fig. 3 is a sectional view illustrating a state where the pressing roll 11 presses the ribbon S.

As shown in the figure, since the pressing roll 11 is positioned/controlled according to an angle of the ribbon S surface immediately after being extruded from the ribbon extruder 3 with respect to the shaft of the molding drum, the ribbon S can be pressed at a right angle all the time.

Fig. 4 shows a positional relation between the affixing roll 2 and the pressing roll 11- to the wound ribbon S in this embodiment in comparison with a conventional device shown in Fig. 6B. In this embodiment, since the pressing roll 11 can be positioned independently of the affixing roll 2, the ribbon S can be surely pressed even if its winding diameter is small as in the case where the ribbon S is affixed to the side face of a tire 100.

Therefore, whatever the laminated state of the ribbon S is, the pressing roll 11 presses the ribbon on the already laminated ribbon and can produce a tire in which air hardly enters.

## Claims

1. A tire molding device provided with a pressing means for pressing/bonding a ribbon pushed out of a ribbon extruder and wound around a molding drum in helical state, the pressing means being provided separately from the ribbon extruder, the device comprising means for controlling drive of the pressing means along a Y-axis and an X-axis crossing each other and means for controlling revolution of the pressing means around a Z-axis at a right angle to the Y-axis and the X-axis, respectively.

2. The tire molding device according to claim 1 , further comprising
means for controlling revolution of the pressing means around the Y-axis.

3. The tire molding device according to claim 1 or 2, comprising
means for controlling drive of the ribbon extruder along the Y-axis and the X-axis crossing each other and means for controlling revolution of the ribbon extruder around the Z-axis at a right angle to the Y-axis and the X-axis.

4. The tire molding device according to any one of claims 1 to 3, wherein
the extruder is provided with an affixing means for winding the ribbon around the molding drum in the helical state, and the means for controlling drive controls drive of the pressing means so that the ribbon immediately after the winding is pressed in synchronization with the winding operation of the affixing means.
